# EUROPÄISCHE PATENTSCHRIFT

(11) **EP 0 555 424 B1**
(45) Veröffentlichungstag und Bekanntmachung des Hinweises auf die Patenterteilung: **13.05.1998**
(21) Anmeldenummer: 92914265.1
(22) Anmeldetag: 03.07.1992
(51) Int. Cl.: C04B 16/00

(54) **VERFAHREN ZUR HERSTELLUNG VON LEICHTEN BETONZUSCHLAGSTOFFEN**
PROCESS FOR MAKING LIGHT CONCRETE AGGREGATES
PROCEDE DE FABRICATION D'AGREGATS LEGERS DE BETON

(30) Priorität: 03.07.1991 HU 224991
(43) Veröffentlichungstag der Anmeldung: 18.08.1993
(73) Patentinhaber: ALPHA BREVET S.A., 1201 Genf (CH)
(72) Erfinder: Stracke, Markus, 1010 Wien (AT)
(74) Vertreter: Barger, Werner, Dipl.-Ing.
(86) Internationale Anmeldenummer: AT9200083
(87) Internationale Veröffentlichungsnummer: WO9301142

(56) Entgegenhaltungen:
- WO-A-88/05765
- AT-A- 391 862
- AT-A- 392 962
- DE-A- 3 722 016
- FR-A- 2 072 808
- GB-A- 1 054 421
- NL-A- 6 813 521

## Beschreibung

Die Erfindung bezieht sich auf ein Verfahren zur Herstellung von leichten Betonzuschlagstoffen aus geschäumten Kunststoffen oder solchen aus zerkleinerten Schaumstoffverpackungen gewonnenen Partikel.

Als Zuschlagstoffe für Leichtbeton wurden bisher gebrannter Blähton, Hüttenbims, Perlite, aufgeschäumte Polystyrolkügelchen oder ähnliche Stoffe verwendet.

Bei diesen ergibt sich jedoch der Nachteil, daß deren Herstellung, weil nur mit aufwendigen Verfahren möglich, teuer und kompliziert ist. Diese Stoffe mit Ausnahme von Polystyrolschaumkügelchen, weisen hohe Wasseraufnahmefähigkeit auf und zumindest bei Blähton und Hüttenbims, auch eine relativ ungünstige Wärmeleitfähigkeit. Perlite sind in dieser Hinsicht etwas besser, doch sind diese sehr feuchtigkeitsempfindlich, und erleiden beim Mischvorgang durch Reibwirkung Volumsverkleinerungen. Die Haftfähigkeit des Zementleimes auf Polystyrolschaumkügelchen ist problematisch. Daher sind Polystyrolschaumkügelchen oder zerkleinerte Partikel aus Schaumstoffrecycling Material vor der Zugabe des Zementleimes "klebrig" zu ummanteln.

Dazu offenbart die WO-8805765 ein Verfahren zur Herstellung von Leichtbeton, bei welchem als Zuschlagstoff Polystyrolschaumstoffpartikel in einem Zwangsmischer mit einem aus Zement und Wasser bereiteten Zementleim vermischt und danach Steinmehl zugemischt wird, wobei die Mengen an Zementleim und Gesteinsmehl derart bemessen werden, daß letzteres im wesentlichen als Trennmittel zwischen den mit Gesteinsmehl umhüllten Kunststoffpartikel wirkt, wonach der so hergestellte Zuschlagstoff, gegebenenfalls nach einer Zwischenlagerung in üblicher Weise mit Zement und Wasser zu Beton angerührt wird.

Weiters beschreibt die FR-PS-2 072 808 die Herstellung eines Leichtbetons mit geringer Dichte, bei der zuerst durch Vermischen von Polystyrolschaumteilchen mit einem Kontaktmittel, wie etwa Epoxidharz, im Mischwasser diese mit einer Kontaktschicht überzogen werden. Danach wird Zement und in weiterer Folge Blähton bestimmter Korngröße beigemischt, woraufhin das mit einem Treibmittel vermischte Restwasser beigegeben wird.

Ziel der Erfindung ist es, die vorstehend beschriebenen Nachteile zu vermeiden und ein Verfahren vorzuschlagen, das auf einfache Weise die Herstellung von sehr billigen und einfach herstellbaren Zuschlagstoffen, bei denen aber ein Zusammenbacken einzelner Partikel im Herstellungsprozeß weitgehend unterbunden ist, ermöglicht, wobei sich die Zuschlagstoffe durch eine hohe Festigkeit und gute Mischbarkeit auszeichnen sollen.

Erfindungsgemäß wird dies bei einem Verfahren der eingangs erwähnten Art dadurch erreicht, daß die Partikel aus geschäumtem Kunststoff in einem Mischtrog eines Zwangsmischers mit Wasser oder einem die Abbindung von Zement beschleunigendem Mittel, wie Wasserglas, benetzt werden und vorzugsweise im gleichen Mischzyklus anschließend mit soviel Zementpulver versetzt werden, daß die gesamte Menge der Benetzungsflüssigkeit mit Zementpulver gebunden wird und daß diese Mischung sofort nach Verlassen des Mischers bzw. nach Beenden des Mischvorganges in die Endverpackung abgefüllt wird.

Durch das Vermischen der Partikel aus geschäumtem Kunststoff mit dem Zementleim, wodurch es zu einem Umhüllen der Partikel mit Zement kommt, wird auch erreicht, daß die Partikel ein höheres spezifisches Gewicht erreichen und daher bei der Herstellung einer Betonmischung mit den erfindungsgemäß hergestellten Zuschlagstoffen in einem üblichen Freifallmischer nicht aufschwimmen und es zu keiner ungleichen Verteilung dieser Zuschlagstoffe kommt.

Unbehandelte Kunststoffschaumpartikel, die z.B. durch Zerkleinern von Verpackungsmaterial gewonnen wurden, vermischen sich kaum mit Zementmilch und würden in einer solchen aufschwimmen. Dies wird durch die vorgeschlagene Behandlung solcher Partikel vermieden, wobei sich durch die Umhüllung mit Zement auch deren Abbindung bei deren Vermischung mit Zementmilch und weiteren Zuschlagstoffen bei der Herstellung einer Betonmischung wesentlich verbessert.

Bei der Verwendung eines die Abbindung beschleunigenden Mittels, wie z.B. Natronwasserglas, das gegebenenfalls verdünnt werden kann, ergibt sich der Vorteil, daß sich anschließend in den Mischtrog zugegebene Mittel, wie z.B. Zementpulver rasch an die benetzten Partikel anlegen und mit diesen abbinden und dabei die Kunststoffschaumpartikel umhüllen. Da dabei der Zement aufgrund der Benetzung der Kunststoffpartikel mit einem ein Abbinden des Zementes beschleunigenden Mittel sehr rasch an diesem erhärtet, kann jedes Partikel nur soviel Zement an sich binden, als das Abbindungs-Beschleunigungsmittel zu binden vermag.

Dies führt dazu, daß jedes Partikel mit einer dünnen, z.B. aus Zementstein bestehenden Schicht umhüllt wird. Dabei hängt die Dicke dieser Schicht von der Dosierung des Abbindebeschleunigers im zur Benetzung der Kunststoffpartikel vorgesehenen Wasser bzw. der absoluten Menge dieser gegebenenfalls mit Wasser verdünnten Mischung, ab.

In weiterer Ausgestaltung des erfindungsgemäßen Verfahrens kann so vorgegangen werden, daß die Partikel aus geschäumtem Kunststoff vor Einbringung in einen Mischtrog einer Hitzebehandlung ausgesetzt werden, die eine Verglasung der Partikeloberflächen bewirkt. Durch die Wärmebehandlung der Partikel wird die Dichte der Partikel erhöht, wobei sich ein überproportionaler Anstieg der Eigenfestigkeit dieser so behandelten Partikel durch die Verglasung ihrer Oberfläche ergibt. Diese Verglasung tritt durch das Anschmelzen der Oberfläche der Partikel ein. Durch die Erhöhung der Partikelfestigkeit wird jedoch auch die Gesamtfestigkeit jeder späteren Mischung erhöht. Dadurch kann an Bindemitteln, wie z.B. Zement, entsprechend gespart werden, weil dadurch auch mit weniger Zement bereits eine bestimmte Festigkeit, verglichen mit herkömmlichen Leichtbetonen, erzielt werden kann. Dadurch ergibt sich auch der Vorteil, daß bei geringerem Eigengewicht des fertigen Leichtbetones gleiche Festigkeiten erzielt werden.

Als besonders günstig hat es sich erwiesen, wenn die Partikel auf eine Korngröße von 2 bis 10 mm zerkleinert, vorzugsweise gemahlen werden. Es können jedoch auch extrem porige Leichtbetone damit hergestellt werden, mit z.B. 20 bis 30 mm Korngröße, um z.B. Drainagekörper, welche frostsicher, wärmdämmend und bis zu einem gewissen Grad elastisch und dabei unverrottbar sein sollen, herzustellen. Insbesondere führt die vorangegangene Hitzebehandlung der Kunststoffschaumpartikel dazu, daß die einzelnen Partikel praktisch kein Wasser mehr aufnehmen können, weil deren Oberfläche "verglast" wurde. Also außer einer Festigkeitssteigerung ist darüberhinaus noch die Verminderung des Wasseraufnahmevermögens erreicht. Damit ist gewährleistet, daß die ohnehin schon kurze Rücktrocknungszeit der fertigen Leichtbetonmasse nochmals verkürzt wird. Dabei wurde jedoch das Diffusionsvermögen der Masse nicht verschlechtert. Ebenso nicht die hygroskopische Leitfähigkeit des lockeren Zementsteingefüges, welches die Schaumstoffpartikel umhüllt. Im Gegenteil - dadurch, daß bei gleicher Festigkeit eines solchen Leichtbetons zufolge der Hitzebehandlung der einzelnen Schaumstoffpartikel nun weniger Zement für die Bildung des Zementleimbindemittels erforderlich wird, wird die Diffusionsfähigkeit der Gesamtmasse erhöht, ebenso die hygroskopische Leitfähigkeit von Feuchtigkeit zur trockenen Seite der Masse hin.

Bei einer geringen Dosierung des Abbindebeschleunigers, wie z.B. Wasserglas, kommt es zu einer Verlängerung der Abbindezeit des Zementes, wodurch sich auch Klumpen von umhüllten Partikel bilden können. Diese Klumpen weisen jedoch eine nur geringe Haftung auf, sodaß sie bei der beim Abfüllen unvermeidlichen Bewegung der Partikel gegeneinander auseinanderfallen. Dies umso mehr, wenn es aufgrund einer Zwischenlagerung zu einem vollständigen Abbinden des Zementpulvers mit den Kunststoffpartikeln kommt.

Um die Bildung von Klumpen weitgehendst zu unterbinden, kann weiters vorgesehen sein, daß nach dem Vermischen der Partikel mit dem mit Zementmilch gut abbindenden, vorzugsweise mineralischen Mittel die ummantelten Partikel mit Steinmehl vermischt werden.

Dabei wirkt das Steinmehl praktisch als Trennmittel für die einzelnen Partikel, wodurch ein so behandelter Zuschlagstoff besonders rieselfreudig bleibt.

Bei der Verwendung von aus zerkleinertem Polystrolschaum-Altmaterial hergestellten Partikeln ergibt sich aufgrund deren zerklüfteter Oberfläche, daß es zu einer gegenseitigen innigen Verzahnung der Partikel bei der Herstellung von Leichtbeton kommt, wodurch sich trotz sehr geringer Rohdichte von z.B. 0,2 bis 0,35 kg/Liter sehr hohe Biegezugfestigkeitswerte ergeben. Versuche haben darüberhinaus ergeben, daß solche Leichtbetone völlig problemlos auch mit Freifallmischern sogar bis zu Rohdichten von 0,6 kg/Liter bis 0,75 kg/Liter hergestellt werden können. Dabei zeigte es sich, daß bei der Rohdichte 0,6 kg/Liter die 28 Tage Würfeldruckfestigkeit 2 N/mm² bzw. 20 kg/cm² betragen hat und bei Rohdichten von ca. 0,75 kg/Liter wurden Würfeldruckfestigkeiten bis zu 3,2 N/mm² bzw. 32 kg/cm² gemessen.

Dieses Material eignet sich nun im Straßenbau bzw. im Tiefbau als Ersatz für die Frostschutzschichte und zugleich als Ersatz fiir die Tragschichte. Lediglich die Verschleißschichte in Form asphaltgebundener oder zementgebundener Massen braucht nun auf die z.b. 40 cm dicke Leichbetonschichte (der Rohdichte 0,6) aufgebracht zu werden. Es hat sich gezeigt, daß die Verbindung des erfindungsgemäß bereiteten Leichtbetons auch mit asphaltgebundenen Verschleißschichten sehr gut erfolgt. Überraschend war, daß die Aufbringung reiner Heißasphaltschichten sehr gute Erfolge bringt.

Erfindungsgemäß wird daher die Verwendung von Leichtbeton, welcher aus Zuschlagstoffen nach der Erfindung hergestellt ist zur Herstellung von Straßenunterbauten, auf welchem unmittelbar nach Einbau oder später nach Aushärtung des Leichtbetones Heißasphalt, Straßenbeläge oder Schwerbeton aufgebracht wird, vorgeschlagen.

Durch die Hitzeeinwirkung des Heißasphaltes schmelzen oberflächlich befindliche Thermoplast-Schaumstoffpartikel. Dadurch erfolgt eine extrem gute Verzahnung dieses Unterbaues mit dem Heißasphalt. Dieses Einsatzgebiet gestattet es, daß auf kostspielige Kies- und Schwerbetonunterbauten im Straßenbau manchmal verzichtet werden kann, da mittels des erfindungsgemäßen Leichtbetons ein billigeres und qualitativ besseres Verfahren angewendet werden kann. Darüberhinaus ist der erfindungsgemäße Leichtbeton sehr wärmedämmend und wasserdurchlässig und dabei aber absolut frostsicher.

Bei einem Versuch wurden 1000 Liter durch Zerreißen von Altmaterial, wie z.B. Styropor bzw. Polystyrolschaum hergestellte Schaumstoffflocken, die jedoch auch durch Aufschäumen von Perlen, z.B. aus Polystyrolschaum hergestellt werden könnten, mit z.B. einer Korngröße von 2 bis 10mm in einem Mischtrog eines Zwangsmischers gefüllt und diesem eine Mischung aus 15 Liter Wasser, das vorher mit einem die Oberflächenspannung vermindernden Mittel versetzt wurde, und 15 bis 18 Liter Natronwasserglas, das als Abbindebeschleuniger dient, zugesetzt.

Danach wurden bei schnell laufender Mischwelle 70 bis 75kg Zement u.zw. ein schnell abbindender Zement wie PZ 475 zugegeben.

Aufgrund des hohen Anteils an Wasserglas der Befeuchtungsflüssigkeit erstarrte der diese benetzten Oberflächen der Partikel berührende Zement innerhalb weniger Sekunden, wobei jedes Partikel nur soviel Zement binden konnte, als die Wasserglas-Wassermischung Zement binden konnte. Dabei bildete sich auf den Partikeln eine durchgehende dünne Zementleimschicht.

Nach einer Mischzeit von 2 min und einer Rastzeit von weiteren 2 min waren die Kunststoffpartikel mit einer erstarrten Zementleimschichte umgeben und die Partikel zeigten keine Neigung zur Klumpenbildung. Es erwies sich auch, daß sich nur leichte Verklebungen ergaben, die aber beim Entleeren aus dem Mischtrog, aufgrund der dabei auf diese einwirkenden relativ geringen Kräfte zerfielen und der fertige Zuschlagstoff sofort in Säcke abgefüllt werden konnte.

Bei einer geringeren Dosierung des Abbindebeschleunigers hat sich gezeigt, daß es nach einer Verpackung der Zuschlagstoffe im direkten Anschluß an deren Herstellung zu Zusammenballungen der Partikel kommen kann. Diese können jedoch sehr leicht durch einfaches Walken der Säcke am nächsten Tag aufgebrochen werden.

Eine weitere Zugabe von Zementpulver bei der Herstellung des oben beschriebenen Mischvorganges führte zu keiner Änderung, und keinem Anwachsen der die Schaumstoffpartikel umhüllenden Zementleimschichte, da das weitere Zementpulver nicht mehr benetzt werden konnte.

Als günstigen Effekt zeigte es sich, daß, obwohl der zufolge von längerer Ablagerung der zerkleinerten Schaumstoffabfälle bereits entwichenen Reste des Aufschäumtreibgases (wie Penthan oder Frigen) während der ersten 8 Stunden nach Abfüllung der frisch ummantelten Schaumstoffpartikel in Kunststoffsäcken, eine überraschende Expansion des Sackinhaltes erfolgte. Besonders dann, wenn die Säcke mit z.B. 200 liter Inhalt Mann an Mann gelagert wurden. Erklärt wird diese unerwartete Volumsvergrößerung um 5 bis 10 % dadurch: Die freiwerdende Hydratationswärme des Zements im Zusammenhang mit der extremen Wärmedämmeigenschaft des Schaumstoffmaterials ergibt Temperaturen von 80 bis 100 Grad Celsius. Die Partikel werden dabei etwas plastisch und die in den Poren der Schaumstoffpartikel befindliche Luft und Treibgasreste expandieren durch die Erwärmung. Auch die Kunststoffsackhülle wird heiß und dehnbar. Somit ist eine selbständige Vermehrung der erzeugten Produkte in Gang gesetzt, Volumsvergrößerungen (des Schnittvolumens) von 5 - 10 % sind die Regel.

Der so erhaltene Zuschlagstoff ließ sich unter Zugabe von Wasser und Zement auch in einem üblichen Freifallmischer unter normalen Baustellenbedingungen zu Leichtbeton verarbeiten. Dieser Leichtbeton wies eine Wärmeleitzahl im Bereich von 0,05 bis 0,07 W/mk bei Rohdichten von 0,18 kg/dm³ bis 0,25 kg/dm³ auf und war hoch diffusionsfähig, absolut frostsicher und erwies sich überdies als nicht spröde und völlig feuersicher.

Ein mit den erfindungsgemäß hergestellten Zuschlagstoffen hergestellter Leichtbeton eignet sich neben zahlreichen Anwendungsgebieten auch besonders für die Anwendung im Fußboden- und Deckenisolierungsbereich und Niveauausgleich, weil dieser nicht nur extrem gute Dämmeingenschaften besitzt, sondern auch deshalb, weil damit die Feuersicherheit gegeben ist. Aber auch im Straßenbau läßt sich dieser mit Prottelith bezeichnete Leichtbeton mit Vorteil einsetzen.

Weiters weist der so erzeugte Leichtbetonzuschlagstoff den Vorteil auf, als nun jederzeit an jedem Ort mittels gewöhnlicher Freifallmischer die erfindungsgemäßen Leichtbetone herstellbar wurden. Es sind keine komplizierten Herstellungstechnologien "vor Ort" erforderlich.

Ein weiteres Anwendungsverfahren mit den erfindungsgemäßen Leichtbetonen besteht darin, als solche Leichtbetone vorzugsweise mit großer "Körnung" der Polystrolschaumstoffpartikel als Dachgefällebildner eingesetzt werden. So wird dieser Leichtbeton zunächst aus den unter Verwendung von Abbindebeschleunigern hergestellten mineralisch ummantelten Partikeln (bis 30 mm Korngröße) - vor Ort auf der Baustelle unter Zugabe von Wasser und Zement im Freifallmischer oder im Estrichfördergerät gemischt und über Schlauchleitungen auf Flachdächer gefördert. Dort wird dieser Leichtbeton entsprechend dem gewünschten Dachgefälle aufgeteilt.

Vorher werden jedoch gelochte Schläuche aus Kunststoff oder anderen Stoffen in die Masse eingelegt. Diese Schläuche z.B. 15 mm bis 80 mm Durchmesser messend, werden auch untereinander verbunden, damit dann, wenn die Oberfläche des geschütteten Beton Materiales mittels wasserdichten Stoffen wie z.B. Polyuraethanschaum oder dergleichen abgedichtet werden - eine Entlüftung des oben erläuterten Leichtbetons bewirkt wird.

Einige Enden der oben erläuterten Luft- oder Dampfdruckdrainageschläuche werden dabei zu Dachentlüftungsstutzen geführt um etwaig entstehende Wasserdampf- oder zufolge von Wärmeeinwirkung entstandenen Luftüberdruck aus der Leichtbetonschicht entweichen zu lassen.

Die Drainageschlauchanordnung ermöglicht es auch, daß Restfeuchtigkeit aus der Prottelith-Schüttgutmasse entweichen kann. Damit wird gesichert, daß keine Aufblähungen des Dachgefälleschüttgutes bzw. der darüber befindlichen Abdichtungshaut entstehen.

Erst durch die Verwendung des extrem porigen erfindungsgemäßen Leichtbetones ist dieses kostensparende Verfahren möglich geworden, weil die Porigkeit des Materiales so groß ist, daß die Entlüftungsrohre oder Schläuche nur im Abstand von 3 - 4 Metern verlegt zu werden brauchen.

Es kann sich auch trotz dieser großen "Feldweiten" kein "Dampfdruck" aufbauen.

Dabei wirkt sich eine größere Korngröße des Polystyrolzuschlagstoffes von z.B. 20 bis 40 mm begünstigend aus. Auch wird das Eigengewicht des Belages damit erheblich vermindert.

Ein weiteres Ziel der Erfindung ist es ein Verfahren zur Herstellung von Leichtbeton anzugeben.

Erfindungsgemäß wird daher vorgeschlagen, daß in einem Trogmischer bei hoher Drehzahl Zement und Wasser zu Zementleim gemischt wird, danach beim Zusetzen von festen Leichtzuschlagstoffen wie Blähton in der Korngröße von 5 bis 20mm als Hauptzuschlagstoffe im Volumsanteil von 35 bis 45% bezogen auf die Gesamtmenge, die Drehzahl des Trogmischers herabgesetzt wird und nach Zugabe von im Recycling gewonnenen und gemahlenen Polystyrolschaumstoffpartikeln von einer Partikelgröße von 2 bis 7mm, gemischt wird.

Durch das vorgeschlagene Verfahren wird der den bekannten Polystyrolschaumbetonen anhaftende Nachteil einer nur sehr geringen Festigkeit vermieden und anderseits deren Vorteil, ein sehr gutes Wärmedämmvermögen, beibehalten. Dabei trägt insbesondere die Zugabe von Blähton zur Erzielung einer hohen Druckbelastbarkeit bei, weil auch dann, wenn die einzelnen Blähtonpartikel auch nicht direkt übereinander liegen, die Blähtonpartikel über schräg verlaufende Kraftflußlinien Druckkräfte übertragen können, weil auch asymmetrisch angeordnete Blähtonhartpartikel zufolge der Einbettung in den speziellen Leichtbeton welcher die Rolle des Zementleimes übernimmt am seitlichen Ausweichen zufolge Belastungen, gehindert bzw. gehalten wird.

Dabei kann weiters vorgesehen sein, daß die Vermischung von Wasser und Zement bei einer Drehzahl von 180 bis 200 Umdrehungen pro Minuten und die Zumischung des Hauptzuschlagstoffes mit einer Drehzahl des Trogmischers von 60 Umdrehungen pro Minute erfolgt und die Zumischung der Polystyrolschaumstoffpartikel ebenfalls bei dieser Drehzahl für die Dauer von ca. einer Minute erfolgt, wobei aus dieser Mischung gegebenenfalls Bauelemente durch Pressen hergestellt werden.

Bei der Herstellung der Bauteile nach dem erfindungsgemäßen Verfahren ist es wesentlich, daß die Mischung gepreßt wird, weil dadurch die grobkörnigen festen Bestandteile z.B. Blähtonkügelchen noch kurze Wegstrecken zu benachbarten solchen Kügelchen zurücklegen und oftmals eine gegenseitige Berührung erreicht werden kann. Damit wird auch bei relativ geringen Mengen von Zuschlagstoffen, wie Blähtonkügelchen im Endeffekt eine außerordentlich hohe Druckfestigkeit dieser Mischung im Fertigprodukt nach der Aushärtung erreicht.

Ein Leichtbeton der in einem Trogmischer hergestellt wird, wobei bei hoher Drehzahl desselben Zement und Wasser zu Zementleim gemischt, danach beim Zusetzen von festen Leichtzuschlagstoffen wie Blähton in der Korngröße von 5 bis 20mm als Hauptzuschlagstoffe im Volumsantiel von 35 bis 45% bezogen auf die Gesamtmenge, die Drehzahl des Trogmischers herabgesetzt und nach Zugabe von im Recycling gewonnenen und gemahlenen Polystyrolschaumstoffpartikeln von einer Partikelgröße von 2 bis 7mm, gemischt wird, kann nach einem weiteren Merkmal der Erfindung für Leichtbetonfertigteile oder -steine verwendet werden, wobei der überwiegende Wandquerschnitt aus einem solchen Leichtbeton besteht, während der wandinnenseitige Teil der Fertigteile oder der -steine nur aus gewöhnlichem Polystyrolschaumstoffbeton mit Polystyrolschaumstoff als alleinigem Zuschlagstoff besteht.

Solche Leichtbetonfertigteile können besonders für Wände verwendet werden, wobei an der mauerinnenseitigen Seite des Bauteiles der mit Polystyrolschaumstoffpartikel versetzte Beton mit einer Stärke von ca. 5 bis 7cm aufgetragen sein kann. Dies ermöglicht den Einbau von Installationen ohne aufwendige Stemmarbeiten. Die andere Schichte eines solchen Bauteiles kann dabei aus Hochfestleichtbeton ausgeführt sein.

Somit ist es möglich geworden, Bauelemente oder Bausteine zu schaffen, die bei extremer Belastbarkeit und sonstigen guten Eigenschaften wie extreme Diffusionsfähigkeit (ein Styroporbeton oder Prottelith mit dem Raumgewicht von 0,35 weist eine Wasserdampfdiffusionswiderstandszahl von 7,3 auf) extreme Wärmedämmeigenschaft, Frostsicherheit usw. nicht mehr als Schalsteine oder Hohlbausteine ausgebildet zu werden brauchen.

Wesentlich ist auch die Tatsache, daß der Polystyrolschaumanteil aus im Recycling gewonnenen Materialien (Verpackungsmaterial) stammt, und praktisch kostenlos zur Verfügung steht. Damit ist ein äußerst preiswerter, bauphysikalisch hochwertiger, homogener Baustoff entstanden.

Nach einem weiteren Merkmal der Erfindung ist die Verwendung eines Polystyrolschaumstoffleichtbetones mit einer Rohdichte von 0,2 kg/Liter bis 0,75 kg/Liter, vorzugsweise von 0,2 kg/Liter bis 0,35 kg/Liter, insbesondere von 0,2 kg/Liter bis 0,25 kg/Liter, hergestellt aus Zement und Polystyrolschaumstoff als alleiniger Zuschlagstoff zum Niveauausgleich und/oder Wärmedämmung von Fußböden und/oder Decken, wie z.B. Holztramdecken, Betondecken oder dgl. vorgesehen.

Bei der Herstellung eines solchen Betons werden vorzugsweise größere Teile von geschäumtem Kunststoff, wie Polystyrolschaum, mittels Zerreißmaschinen zerkleinert, bis Korngrößen von vorzugsweise 2 bis 8mm erreicht sind. Diese Partikel werden in der bereits oben erläuterten Weise mit Zementleim ummantelt.

Für die Herstellung des Zementleimes beträgt die Mischwellendrehzahl bei einem z.B. 100 Liter fassenden Trogmischer etwa 180 bis 200 Umdrehungen pro Minute bei gleichzeitiger Zugabe von porenbildenden und die Affinität fördernden Mitteln. Die Mischzeit für den Zementleim beträgt dabei ca. 1 Minute, während danach sofort die gesamte Menge an zerkleinerten Schaumstoffpartikeln in den Mischtrog geschüttet wird.

Besonders geeignet haben sich Verpackungsmaterialien höherer Rohdichte aus Schaumstoff, welche auch nach der Zerkleinerung pro Partikel so brauchbare Festigkeiten aufweisen, daß der genannte damit erzeugte Wärmedämm-Leichtbeton nach Erstarren und Abbinden auch bei Rohdichten von 0,20 immer noch begehbar ist.

Es hat sich gezeigt, daß solche Mischungen mittels Förderschnecken gut transportierbar sind.

Das erfindungsgemäße Material wird auf Fußboden und/oder Decken lose geschüttet und abgezogen.

Auch ist es möglich solches Mischgut auf Holztramdecken aufzubringen, weil das Material hoch diffusionsfähig ist, und Holz daher nicht leidet.

Dieses Mischgut weist eine Wärmeleitzahl von 0,048 W/mK (bei Rohdichte 0,20) auf, auch ist dieses Material als nicht brennbarer Baustoff der Klasse A einzustufen.

Zu den Zeichnungen zeigt:
Fig. 1 schematisch den Aufbau eines erfindungsgemäßen Betons, und
Fig. 2 einen erfindungsgemäßen Bauteil.

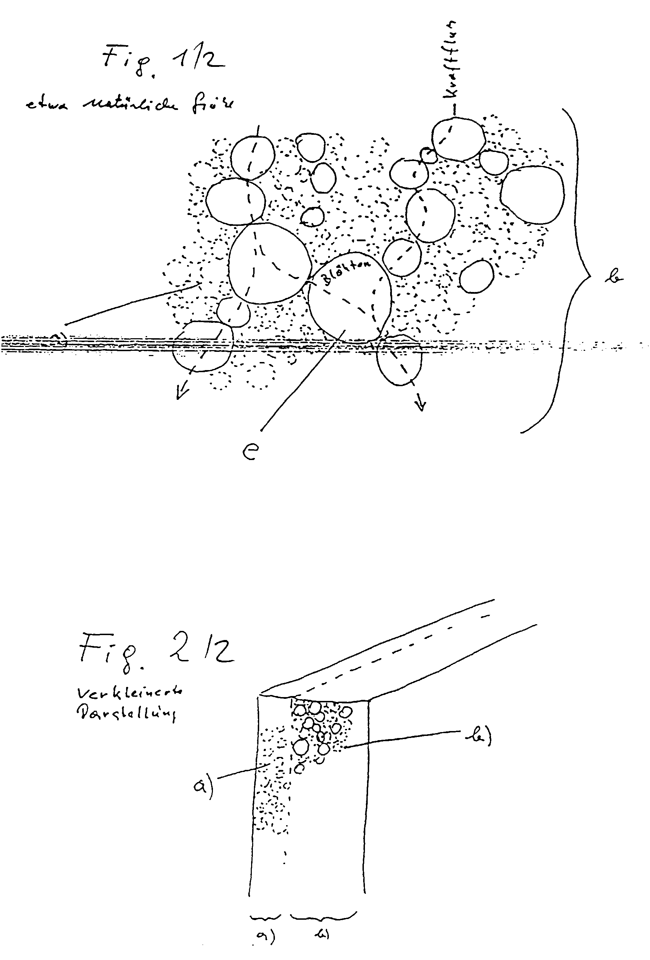

Fig. 1 zeigt ein Schliffbild eines erfindungsgemäßen Betons. aus diesem ist zu ersehen, daß die eingebetteten Blähtonkügelchen e, die in dem Polystyrolpartikel aufweisenden Beton a eingebettet sind, Druckkräfte auch dann aufnehmen können, wenn die Blähtonkügelchen nicht direkt untereinander liegen.

Fig. 2 zeigt einen Betonteil, der zwei Schichten aufweist, wobei eine Schicht lediglich Beton a, der lediglich Polystyrolpartikel als Zuschlagstoff aufweist, enthält. Die zweite Schicht besteht aus Beton b, der außerdem auch noch Blähtonkügelchen e enthält.

## Patentansprüche

1. Verfahren zur Herstellung von leichten Betonzuschlagstoffen aus geschäumten Kunststoffen oder solchen aus zerkleinerten Schaumstoffverpackungen gewonnenen Partikel, wobei die Partikel mit einer Zementleimschicht umhüllt werden, **dadurch gekennzeichnet**, daß die Partikel aus geschäumtem Kunststoff, in einem Mischtrog eines Zwangsmischers mit einem die Abbindung von Zement beschleunigendem Mittel, wie Wasserglas, welches gegebenenfalls mit Wasser verdünnt ist, benetzt werden und vorzugsweise im gleichen Mischzyklus anschließend mit soviel Zementpulver versetzt werden, daß die gesamte Menge der Benetzungsflüssigkeit mit Zementpulver gebunden wird und daß diese Mischung sofort nach Verlassen des Mischers bzw. nach Beenden des Mischvorganges in die Endverpackung abgefüllt wird.

2. Verfahren nach Anspruch 1, **dadurch gekennzeichnet**, daß die Partikel aus geschäumtem Kunststoff vor Einbringung in einen Mischtrog einer Hitzebehandlung ausgesetzt werden, die eine Verglasung der Partikeloberflächen bewirkt.

3. Verfahren nach Anspruch 1 oder 2, **dadurch gekennzeichnet**, daß die Korngröße der Partikel 2 bis 10mm, 10 bis 20mm oder auch 20 bis 30mm oder darüber beträgt.

4. Verfahren nach Anspruch 1, 2 oder 3, **dadurch gekennzeichnet**, daß die frisch erzeugten Zuschlagstoffe in mindestens 200 Liter fassende Kunststoffsäcke abgefüllt werden.

5. Verfahren zur Herstellung von Leichtbeton, wobei Polystyrolschaumstoffteilchen und Leichtzuschlagstoffe, wie Blähton, beigemischt werden, **dadurch gekennzeichnet**, daß in einem Trogmischer bei hoher Drehzahl Zement und Wasser zu Zementleim gemischt wird, danach beim Zusetzen von festen Leichtzuschlagstoffen, wie Blähton, in der Korngröße von 5 bis 20mm als Hauptzuschlagstoffe im Volumsanteil von 35 bis 45% bezogen auf die Gesamtmenge, die Drehzahl des Trogmischers herabgesetzt wird und nach Zugabe von im Recycling gewonnenen und gemahlenen Polystyrolschaumstoffpartikeln von einer Partikelgröße von 2 bis 7mm, gemischt wird.

6. Verfahren nach Anspruch 5, **dadurch gekennzeichnet**, daß die Vermischung von Wasser und Zement bei einer Drehzahl von 180 bis 200 Umdrehungen pro Minuten und die Zumischung des Hauptzuschlagstoffes mit einer Drehzahl des Trogmischers von 60 Umdrehungen pro Minute erfolgt und die Zumischung der Polystyrolschaumstoffpartikel ebenfalls bei dieser Drehzahl für die Dauer von ca. einer Minute erfolgt, wobei aus dieser Mischung gegebenenfalls Bauelemente durch Pressen hergestellt werden.

7. Verwendung von Leichtbeton, welcher aus Zuschlagstoffen nach einem der Ansprüche 1 bis 4 hergestellt ist zur Herstellung von Straßenunterbauten, auf welchem unmittelbar nach Einbau oder später nach Aushärtung des Leichtbetones Heißasphalt, Straßenbeläge oder Schwerbeton aufgebracht wird.

8. Verwendung des Leichtbetones hergestellt nach Anspruch 5 oder 6 für Leichtbetonfertigteile oder -steine, wobei der überwiegende Wandquerschnitt aus solchem gemäß Anspruch 4 oder 5 hergestelltem Leichtbeton besteht, während der wandinnenseitige Teil der Fertigteile oder der Steine nur aus gewöhnlichem Polstyrolschaumstoffbeton mit Polystyrolschaumstoff als alleinigem Zuschlagstoff besteht.

9. Verwendung eines Polstyrolschaumstoffleichtbetones mit einer Rohdichte von 0,2 kg/Liter bis 0,75 kg/Liter, vorzugsweise von 0,2 kg/Liter bis 0,35 kg/Liter, insbesondere von 0,2 kg/Liter bis 0,25 kg/Liter, hergestellt aus Zement und Polystyrolschaumstoff als alleiniger Zuschlagstoff zum Niveauausgleich und/oder Wärmedämmung von Fußböden und/oder Decken, wie z.B. Holztramdecken, Betondecken oder dgl.

10. Verwendung von mit einem Verfahren nach Anspruch 1 bis 4 hergestellten Zuschlagstoffen zur Herstellung eines Leichtbetons.

## Claims

1. A method of producing lightweight concrete aggregates from foamed plastics materials or particles thereof obtained from comminuted foamed material packagings, wherein the particles are enveloped with a cement paste layer, characterised in that the particles of foamed plastics material are wetted in a mixing trough of a pug-type mixer with a medium, such as water glass, which accelerates the setting of cement and which is optionally diluted with water, and preferably in the same mixing cycle are subsequently mixed with cement powder in such a quantity that the entire amount of the wetting liquid is bound with cement powder, and in that the end packaging is filled with this mixture immediately after leaving the mixer or after the end of the mixing process.

2. A method according to Claim 1, characterised in that, before being introduced into a mixing trough, the particles of foamed plastics material are subjected to a heat treatment which induces glazing of the particle surfaces.

3. A method according to Claim 1 or 2, characterised in that the grain size of the particles is 2 to 10 mm, 10 to 20 mm or else 20 to 30 mm or greater.

4. A method according to Claim 1, 2 or 3, characterised in that the freshly produced aggregates are poured into plastics bags holding at least 200 litres.

5. A method of producing lightweight concrete, wherein polystyrene foam particles and lightweight aggregates, such as expanded clay, are added, characterised in that cement and water are mixed at high speed in a trough mixer to form cement paste, and subsequently when adding solid lightweight aggregates, such as expanded clay, in a grain size of 5 to 20 mm as principal aggregates in a proportion by volume of 35 to 45 % in relation to the overall weight, and after adding crushed polystyrene foam particles with a particle size of 2 to 7 mm, which have been obtained from recycling, the speed of rotation of the trough mixer is reduced.

6. A method according to Claim 5, characterised in that the mixing of water and cement is carried out at a speed of 180 to 200 revolutions per minute and the addition of the principal aggregrate at a speed of the trough mixer of 60 revolutions per minute, and the addition of the polystyrene foam particles also takes place at this speed of rotation for a period of about one minute, components being optionally produced from this mixture by compression.

7. Use of lightweight concrete, which is produced from aggregates according to any one of Claims 1 to 4, for the production of road substructures, on to which hot asphalt, road surfacings or heavy concrete is applied immediately after incorporating or subsequently after hardening of the lightweight concrete.

8. Use of the lightweight concrete produced according to Claim 5 or 6 for lightweight concrete prefabricated members or bricks, wherein the predominant wall cross-section consists of the lightweight concrete produced according to Claim 4 or 5, whereas the part of the prefabricated members or bricks on the wall inside consists only of conventional polystyrene foam concrete with polystyrene foam as the sole aggregate.

9. Use of a polystyrene foam lightweight concrete with a bulk density of 0.2 kg/litre to 0.75 kg/litre, preferably of 0.2 kg/litre to 0.35 kg/litre, in particular of 0.2 kg/litre to 0.25 kg/litre, produced from cement and polystyrene foam as sole aggregate for level equalisation and/or thermal insulation of floorings and/or ceilings, for example timber floorings, concrete floorings or the like.

10. Use of aggregates produced by a method according to Claims 1 to 4 for the production of a lightweight concrete.

## Revendications

1. Procédé de fabrication d'agrégats légers de béton à partir de matières plastiques moussées ou de particules obtenues à partir d'emballages en mousse réduits en petits morceaux, les particules étant enrobées d'une couche de pâte de ciment, **caractérisé en ce que** les particules en matière plastique moussée sont mouillées dans une cuve de malaxage d'un malaxeur à mélange forcé avec un agent accélérant la prise du ciment, comme le verre soluble, cet agent étant le cas échéant dilué à l'eau, et que les particules sont ensuite mélangées de préférence au cours du même cycle de malaxage à une telle quantité de poudre de ciment que la quantité totale du liquide de mouillage est liée à la poudre de ciment et que ce mélange est rempli dans des emballages définitifs tout de suite après la sortie du malaxeur ou à la suite du processus de malaxage.

2. Procédé selon la revendication 1, **caractérisé en ce que** les particules en matière plastique moussée sont exposées à un traitement à chaud avant d'être chargées dans une cuve de malaxage, ce traitement provoquant une vitrification de la surface des particules.

3. Procédé selon la revendication 1 ou 2, **caractérisé en ce que** le calibre des particules est de 2 à 10 mm, de 10 à 20 mm ou aussi jusqu'à 30 mm ou est supérieur.

4. Procédé selon la revendication 1, 2 ou 3, **caractérisé en ce que** les agrégats fraîchement produits sont emballés dans des sacs en plastique d'une contenance minimum de 200 litres.

5. Procédé de fabrication de béton léger, avec addition de particules en mousse de polystyrène et d'agrégats légers, tels que l'argile expansée, **caractérisé en ce que**, dans un mélangeur à bac, du ciment et de l'eau sont mélangés à haute vitesse pour donner de la pâte de ciment, que la vitesse de rotation du mélangeur à bac est ensuite réduite lors de l'addition, comme agrégats principaux, d'agrégats légers solides, tels que de l'argile expansée, d'un calibre de 5 à 20 mm dans un pourcentage de 35 à 45% par rapport à la quantité totale, et que l'on effectue le mélange après l'addition de particules de mousse de polystyrène broyées obtenues par recyclage, ayant un diamètre de 2 à 7 mm.

6. Procédé selon la revendication 5, **caractérisé en ce que** le prémélange de l'eau et du ciment a lieu à une vitesse de rotation de 180 à 200 tours par minute et que l'addition de l'agrégat principal a lieu à une vitesse de rotation du mélangeur à bac de 60 tours par minute et que l'addition de particules en mousse de polystyrène est également effectuée à cette vitesse de rotation pour une durée d'env. une minute, des éléments de construction pouvant le cas échéant être fabriqués par pressage à partir de ce mélange.

7. Utilisation de béton léger fabriqué en agrégats selon l'une des revendications 1 à 4, pour la fabrication d'infrastructures de route sur lesquelles, directement après la pose ou plus tard après durcissement du béton léger, de l'asphalte chaud, un revêtement routier ou du béton lourd est posé.

8. Utilisation du béton léger fabriqué selon la revendication 5 ou 6 pour des éléments préfabriqués ou des briques en béton léger, la section de paroi principale étant constituée de béton léger fabriqué selon la revendication 4 ou 5; alors que le côté intérieur de la paroi des éléments préfabriqués ou des briques est seulement en béton normal en mousse de polystyrène, avec de la mousse de polystyrène comme unique agrégat.

9. Utilisation d'un béton léger en mousse de polystyrène ayant une densité apparente de 0,2 kg/litre à 0,75 kg/litre, de préférence de 0,2 kg/litre à 0,35 kg/litre, en particulier de 0,2 kg/litre à 0,25 kg/litre, fabriqué à partir de ciment et de mousse en polystyrène comme unique agrégat, pour la compensation de niveau et/ou comme isolation thermique de sols et/ou plafonds, comme des plafonds en poutres, plafonds en béton ou plafonds similaires.

10. Utilisation d'agrégats fabriqués selon un procédé conforme aux revendications 1 à 4 pour la fabrication d'un béton léger.
